# EUROPÄISCHE PATENTSCHRIFT

(11) **EP 2 423 529 B1**
(45) Veröffentlichungstag und Bekanntmachung des Hinweises auf die Patenterteilung: **07.11.2012**
(21) Anmeldenummer: 11006421.9
(22) Anmeldetag: 04.08.2011
(51) Int. Cl.: F16D 25/08, F16D 48/02

(54) **Druckbegrenzungseinrichtung in einer hydraulischen Strecke**
Pressure limitation device in a hydraulic line
Dispositif de limitation de pression dans une voie hydraulique

(30) Priorität: 26.08.2010 DE 102010035455
(43) Veröffentlichungstag der Anmeldung: 29.02.2012
(73) Patentinhaber: Schaeffler Technologies AG & Co. KG, 91074 Herzogenaurach (DE)
(72) Erfinder: Grabenstätter, Jan, 76593 Gernsbach (DE)

(56) Entgegenhaltungen:
- WO-A1-2009/036729
- DE-A1-102005 021 743
- JP-A- 4 145 238
- JP-A- 2006 177 514
- US-A- 5 937 988

## Beschreibung

Die Erfindung betrifft eine Druckbegrenzungseinrichtung in einer hydraulischen Strecke zur Kupplungsbetätigung, umfassend einen Geberzylinder und einen Nehmerzylinder, die über eine von einem Fluid durchströmte Druckleitung miteinander verbunden sind, wobei die Druckbegrenzungseinrichtung zumindest ein mit einem Federelement in Wirkverbindung stehendes und eine zentrale Blendenbohrung sowie weitere über den Umfang verteilte Öffnungen besitzendes, becherförmig ausgebildetes, Blendenelement aufweist, welches in einem Gehäuse axial beweglich aufgenommen und bei Überschreitung eines vorbestimmten Volumenstroms des Fluids zuschaltbar ist.

Hydraulische Betätigungssysteme sollen eine sichere und komfortable Betätigung der Kupplung über die in der hydraulischen Strecke angeordneten Bauelemente ermöglichen.

Um insbesondere Belastungsspitzen, die mit extremen Einkuppelgeschwindigkeiten und damit Drehmomentspitzen verbunden sind, zu vermeiden, kommen häufig Drosselventile zum Einsatz, die in der Hydraulikleitung zwischen Geberzylinder und Nehmerzylinder vorgesehen sind.

So offenbart die DE 43 34 551 C2 eine hydraulische Betätigungseinrichtung im Antriebsstrang eines Kraftfahrzeuges, bei welcher in der Hydraulikleitung ein Drosselventil angeordnet ist. Dabei ist in einem Ventilgehäuse ein becherförmig ausgebildeter Ventilkörper vorgesehen, innerhalb dessen eine Druckfeder geführt ist. Die Außenkontur des Ventilkörpers ist gegenüber der Innenwand des Ventilgehäuses so gestaltet, dass ein ungehinderter Durchfluss der Hydraulikflüssigkeit in eine Richtung (zum Nehmerzylinder) gewährleistet ist. Beim Schließen der Kupplung wird der becherförmige Ventilkörper gegen einen in die Gehäusebohrung eingepressten Ringkörper gedrückt, so dass ein Durchfluss von Fluid nur durch eine zentrale Durchflussöffnung möglich ist.

Zur Begrenzung der Einkuppelgeschwindigkeit werden in der hydraulischen Strecke häufig so genannte "Peak Torque Limiter" (PTL) eingesetzt. Dabei werden beim Durchströmen des PTL oder Drehmomentspitzenbegrenzers in Einkuppelrichtung Druckabfälle erzeugt. Zur Ausführung dieser Funktion weist der PTL bewegliche Blenden auf. Allerdings können bei dem PTL auch im normalen Fahrbetrieb Druckabfälle erzeugt werden, welche insbesondere bei kleinen Blendendurchmessern, geringen Pedalkräften oder im System auftretenden Verlusten (z. B. bei Druckabfällen oder Reibungen) den Bedienkomfort und das Übertragungsverhalten der hydraulischen Strecke negativ beeinflussen.

In DE 10 2009 054 272 A1 ist eine derartige Druckbegrenzungseinrichtung beschrieben, die beim Einkuppelvorgang über einen mit einer zentralen Blendenöffnung sowie mit Ausnehmungen in der Mantelfläche versehenen Blendenkörper eine Druckreduzierung bzw. einen Druckabfall erzeugt. Der becherförmige Blendenkörper ist in dem Grundkörper axial bewegbar angeordnet, beispielsweise zwischen einem Anschlag des Grundkörpers und einem endseitig im Grundkörper aufgenommenen Einpresskörper. Der Einpresskörper nimmt die Druckleitung lagefixierend auf. Beim Einkuppelvorgang der Kupplung liegt der Blendenkörper mit seiner Bodenfläche an einem durch eine Stufe zwischen der Durchgangsbohrung und einer Sacklochbohrung des Grundkörpers gebildeten Anschlag an, wodurch der Fluidstrom in Richtung des Geberzylinders und somit die Einkuppelgeschwindigkeit reduziert wird.

Bei den so genannten "Speed Controlled Peak Torque Limiter" (SCPTL) wird die Blende erst bei einem vorbestimmten Volumenstrom zugeschaltet, wodurch eine Druckreduzierung bzw. ein Druckabfall erzeugt wird.

Eine derartige Druckbegrenzungseinrichtung wird beispielsweise in DE 10 2005 021 743 A1 beschrieben. Sie weist zumindest einen Blendenkörper mit einer zentralen Blendenbohrung zur Druckreduzierung und einen mittels einer Feder druckbeaufschlagten, topfförmigen Haltering auf, an dessen Boden eine Zentralbohrung und eine oder mehrere auf einem Teilkreis radial von dieser beabstandet angeordnete Öffnungen vorgesehen sind.

Der Blendenkörper bzw. die zentrale Blendenbohrung sind beim Einkuppeln der Kupplung bei Überschreitung eines vorbestimmten Volumenstromes des Fluids zuschaltbar und die radial beabstandeten Öffnungen bei Überschreiten eines vorbestimmten Druckabfalls verschließbar. Als Anschläge dienen hierbei ein die genannten Bauteile aufnehmendes Gehäuse sowie ein Gehäuseverschluss, der das Gehäuse geberzylinderseitig verschließt.

In einer Ausführungsform sind dabei der Blendenkörper und der Haltering zu einem Teil zusammengefasst. In einer weiteren Ausgestaltung tritt an Stelle des Gehäuseverschlusses ein weiteres Gehäuse.

Diese auch in der hydraulischen Verbindungsleitung von Geberzylinder und Nehmerzylinder anordenbare Druckbegrenzungseinrichtung hat den Vorteil, dass durch die volumenstromabhängige Arbeitsweise des Blendenkörpers eine relativ verlustfreie Betätigung der Kupplung realisierbar ist.

Allerdings ist der Toleranzbereich, in dem die Blende zugeschaltet wird, relativ groß. Zudem weist diese Einrichtung neben einem großen radialen Bauraumbedarf eine komplizierte Geometrie von Gehäuse und Gehäuseverschluss sowie eine aufwendige Montage auf. Auch nimmt der Gehäuseverschluss bei einem relativ großen Querschnitt die auftretenden Druckkräfte auf, was wiederum einer höheren Elastizität des Bauteils bedarf.

JP 2006-177514 offenbart eine zum Anspruch 1 ähnliche Druckbegrenzungseinrichtung.

Es besteht die Aufgabe der Erfindung darin, eine Druckbegrenzungseinrichtung in einer hydraulischen Strecke zur Kupplungsbetätigung vorzuschlagen, die bei einer volumenstromgesteuerten Arbeitsweise einen geringen radialen Bauraumbedarf und einen kleinen Toleranzbereich für die Zuschaltung eines Blendenelements aufweist.

Diese Aufgabe wird mit einer Druckbegrenzungseinrichtung mit den Merkmalen des ersten Anspruchs gelöst. Weitere vorteilhafte Ausgestaltungen dieser Lösung ergeben sich aus den Unteransprüchen.

Demnach wird die Aufgabe durch eine Druckbegrenzungseinrichtung die in der hydraulischen Strecke zur Kupplungsbetätigung gelöst, umfassend einen Geberzylinder und einen Nehmerzylinder, die über eine von einem Fluid durchströmte Druckleitung miteinander verbunden sind einbaubar ist, wobei die Druckbegrenzungseinrichtung zumindest ein mit einem Federelement in Wirkverbindung stehendes und eine zentrale Blendenbohrung sowie weitere über den Umfang verteilte Öffnungen besitzendes, becherförmig ausgebildetes, Blendenelement aufweist, welches in einem Gehäuse axial beweglich aufgenommen und bei Überschreitung eines vorbestimmten Volumenstroms des Fluids zuschaltbar ist, wobei erfindungsgemäß das federbelastete Blendenelement innerhalb eines zumindest teilweise hohlzylindrisch ausgebildeten sowie in einer Gehäusebohrung des Gehäuses axial fixierten Anschlagelements geführt ist und wobei das Federelement zwischen dem Blendeeelement und dem Anschlag element angeordnet ist.

Das Blendenelement ist dabei zwischen einem durch eine Durchmesserverringerung der Gehäusebohrung gebildeten Absatz des Gehäuses und einem innerhalb des Anschlagelements ausgebildeten Grundkörper axial bewegbar angeordnet.

In vorteilhafter Weise wird das mit dem Blendenelement in Kontakt stehende und als Druckfeder ausgebildete Federelement innerhalb eines Hohlraums geführt, welcher zwischen dem Grundkörper und einer radial außen befindlichen Mantelfläche des Anschlagelements ausgebildet ist.

Vorzugsweise liegt die Mantelfläche des Anschlagelements mit ihrem Außenumfang an einer Wand der Gehäusebohrung an.

Eine weitere Ausgestaltung der Erfindung sieht vor, dass das becherförmig ausgebildete Blendenelement mit seiner Bodenfläche an einer Stirnseite des Grundkörpers zum Anschlag bringbar ist, wobei die Seitenwand des Blendenelements an der Innenseite der Mantelfläche des Anschlagelements anliegt.

In vorteilhafter Weise weist die Seitenwand des Blendenelements anschlagelementseitig eine die Bodenfläche überragende Verlängerung auf, die mit der Druckfeder in Kontakt steht.

Vorzugsweise sind an dem Ende der Mantelfläche Schnapphaken vorgesehen.

In vorteilhafter Weise ist das Anschlagelement innerhalb der Gehäusebohrung durch einen die Druckleitung aufnehmenden Stecker axial fixiert, wobei ein O-Ring das Anschlagelement gegen das Gehäuse abdichtet.

Nachfolgend wird die Erfindung anhand eines Ausführungsbeispiels und zugehörigen Zeichnungen näher erläutert.

Es zeigen:
- Figur 1: einen Längsschnitt der erfindungsgemäßen Druckbegrenzungseinrichtung;
- Figur 2: eine schematische Schnittdarstellung des Blendenelements in Vorder- und Seitenansicht;
- Figur 3: eine schematische Darstellung eines Teilschnitts des Anschlagelements.

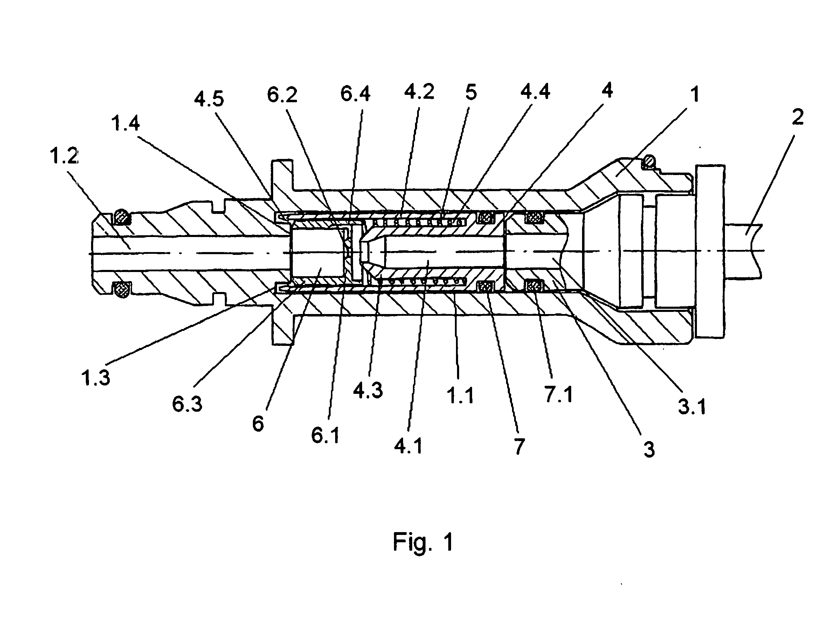

Gemäß Figur 1 weist eine Druckbegrenzungseinrichtung ein Gehäuse 1 auf, welches beispielsweise in einer Druckleitung 2 zwischen einem Geber- und einem Nehmerzylinder (hier nicht gezeigt) vorgesehen ist. Ein Ende der Druckleitung 2 wird von einem Stecker 3 aufgenommen, der geberzylinderseitig in eine axiale Gehäusebohrung 1.1 des Gehäuses1 eingesetzt ist. Der Stecker 3 liegt dabei mit seiner Stirnseite an einem zumindest teilweise hohlzylindrisch ausgeführten Anschlagelement 4 an, welches ebenfalls in der Gehäusebohrung 1.1 angeordnet ist. Das Anschlagelement 4 besitzt eine zentrale Durchgangsbohrung 4.1, die mit einer konzentrischen Durchgangsbohrung 3.1 des Steckers 3 korrespondiert.

Radial außen weist das Anschlagelement 4 eine hohlzylindrisch ausgeführte Mantelfläche 4.2 auf, die mit ihrem Außenumfang an der Wand der Gehäusebohrung 1.1 anliegt und einen die Durchgangsbohrung 4.1 aufnehmenden Grundkörper 4.3 des Anschlagelements 4 in axialer Richtung - auf der dem Stecker 3 abgewandten Seite - überragt. In diesem hohlzylindrischen Teil des Anschlagelements 4 befindet sich ein becherförmig ausgebildetes Blendenelement 6, welches in seiner der Stirnseite des Grundkörpers 4.3 des Anschlagelements 4 zugewandten Bodenfläche 6.1 eine zentrale Blendenbohrung 6.2 besitzt, die koaxial zu der Durchgangsbohrung 4.1 des Anschlagelements 4 angeordnet ist. Die Seitenwand 6.3 des becherförmigen Blendenelements 6 liegt mit ihrem Außenumfang an der Innenseite der Mantelfläche 4.2 des Anschlagelements 4 an und weist anschlagelementseitig eine über die Bodenfläche 6.1 hülsenartig hinausreichende Verlängerung 6.4 auf, die mit einem als Druckfeder 5 ausgebildeten Federelement in Wirkverbindung steht. Die Druckfeder 5 ist dabei in einem sich in radialer Richtung zwischen dem Grundkörper 4.3 und der Mantelfläche 4.2 des Anschlagelements 4 befindenden Hohlraum 4.4 angeordnet.

Des Weiteren sind an der Bodenfläche 6.1 des Blendenelements 6 radial außen und über den Umfang verteilt mehrere (hier drei) Öffnungen/Bypassbohrungen 6.5 vorgesehen. Die von der Bodenfläche 6.1 wegweisende Öffnung des becherförmigen Blendenelements 6 weist in Richtung des nehmerzylinderseitigen Ausgangs des Gehäuses 1. Die in der Art einer Sacklochbohrung ausgebildete Gehäusebohrung 1.1 geht hier in eine mit einem geringeren Durchmesser versehene Durchgangsbohrung 1.2 über, die koaxial zu den Durchgangsbohrungen 3.1, 4.1 des Steckers 3 bzw. des Anschlagelements 4 angeordnet ist und dem Durchströmen von Fluid dient. Die Durchgangsbohrungen 1.2, 3.1, 4.1 weisen dabei in etwa einen gleichen Durchmesser auf.

Die hohlzylindrische Mantelfläche 4.2 des Anschlagelements 4 ragt mit ihrem Ende in eine axiale Einbuchtung 1.3 des Gehäuses 1 hinein, die zwischen der Wand der Gehäusebohrung 1.1 und einem auf Grund der Durchmesserverringerung der Gehäusebohrung 1.1 vorhandenen Absatz 1.4 des Gehäuses 1 ausgebildet ist. Der in Richtung Blendenelement 6 vorspringende Absatz 1.4 nimmt die Durchgangsbohrung 1.2 auf und dient als Anschlag für die Seitenwand 6.3 des axial bewegbaren Blendenelements 6. Dabei wird das Blendenelement 6 im hohlzylindrischen Teil des Anschlagelements 4 geführt und mittels der Druckfeder 5, die an der hülsenförmigen Verlängerung 6.4 der Seitenwand 6.3 angreift, gegen den Absatz 1.4 des Gehäuses 1 gedrückt. Auf der anderen Seite dient der Grundkörper 4.3 des Anschlagelements 4 als Anschlag für die Bodenfläche 6.1 des Blendenelements 6.

Vorzugsweise sind an dem in die Einbuchtung 1.3 des Gehäuses 1 hineinragenden Ende der Mantelfläche 4.2 des Anschlagelements 4 Schnapphaken 4.5 vorgesehen, die eine Montage von Blendenelement 6, Druckfeder 5 und Anschlagelement 4 außerhalb des Gehäuses 1 ermöglichen. Ein in einer umlaufenden Nut 4.6 angeordneter O-Ring 7 dichtet das Anschlagelement 4 und ein analog am Stecker 3 vorgesehener O-Ring 7.1 den Stecker 3 gegen das Gehäuse 1 ab.

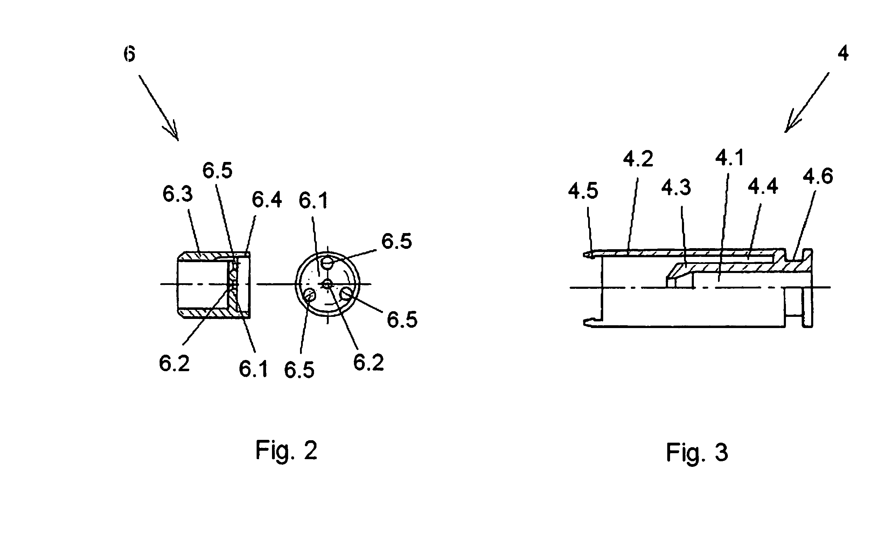

In Figur 2 ist das Blendenelement 6 als Einzelbauteil dargestellt, während in Figur 3 das Anschlagelement 4 in einem Teilschnitt schematisch gezeigt ist.

Das Gehäuse 1 stellt hierbei einen entsprechend verlängerten Adapterstecker mit geringen radialen Abmessungen dar. In vorteilhafter Weise können die außerhalb des Gehäuses 1 montierten Blendenelement 6, Druckfeder 5 und Anschlagelement 4 als fertig montierte Baugruppe in die Gehäusebohrung 1.1 eingesetzt werden. Bevor der Stecker 3 angeschlossen wird, wird mittels der Reibung des O-Rings 7 das Anschlagelement 4 in dem Gehäuse 1 fixiert. Dabei ist die benötigte Federkraft deutlich kleiner als die Losbrechkraft des O-Rings 7. Dann wird der Stecker 3 mit dem aufgenommenen Ende der Druckleitung 2 in die Gehäusebohrung 1.1 eingesetzt. Hier dient er als axiale Fixierung des Anschlagelements 4.

Gegenüber einer Fixierung des Bauteils mittels Einpressen - wie es im Stand der Technik häufig durchgeführt wird - hat eine Fixierung mittels O-Ring 7, 7.1 einige Vorteile. So ist mehr Bauraum für die Innenbauteile vorhanden, da nicht wie bei einer Pressverbindung der Presssitz und somit auch die Innenbauteile auf einem kleineren Durchmesser als der O-Ring 7.1 des Steckers 3 liegen müssen. Da sich das Anschlagelement 4 axial am Stecker 3 abstützt, muss nicht wie bei einer Pressverbindung auf die auftretenden Axialkräfte geachtet werden. Zudem kann auf Grund der O-Ring-Abdichtung für das Anschlagelement 4 ein anderes Material verwendet werden, als für das Gehäuse 1. Somit kann auch für das Anschlagelement 4 und das Blendenelement 6 ein Material eingesetzt werden, welches geringe Formtoleranzen aufweist. Das bedeutet, dass der Toleranzbereich für die Zuschaltung des Blendenelements 6 kleiner ausfällt. Das wiederum hat eine Vergrößerung des Einsatzbereiches der Druckbegrenzungseinrichtung zur Folge. Zudem ermöglicht der geringe radiale Bauraum der erfindungsgemäßen Druckbegrenzungseinrichtung einen Einbau in eine Steckverbindung. Dadurch kann auf einen separaten Gehäuseverschluss verzichtet werden.

Die Wirkungsweise der erfindungsgemäßen Druckbegrenzungseinrichtung ist folgende:
Die Figur 1 zeigt die erfindungsgemäße Druckbegrenzungseinrichtung beim Auskuppelvorgang. Durch das aus Richtung Geberzylinder (in Figur 1 von rechts nach links gesehen) durch die Durchgangsbohrung 3.1 des Steckers 3 und die Durchgangsbohrung 4.1 des Anschlagelements 4 strömende Fluid wird das Blendenelement 6 mit seiner Seitenwand 6.3 gegen den Absatz 1.4 des Gehäuses 1 geschoben. Das das Blendenelement 6 umströmende Fluid gelangt sowohl durch die zentrale Blendenbohrung 6.2 als auch durch die Bypassbohrungen 6.5 in die nehmerzylinderseitige Durchgangsbohrung 1.2 des Gehäuses 1.

Bei dem hier nicht dargestellten Einkuppelvorgang kommt es zu einem Volumenstrom vom Nehmerzylinder in Richtung Geberzylinder (in Figur 1 von links nach rechts). Das durch die Durchgangsbohrung 1.2 des Gehäuses 1 strömende Fluid gelangt zunächst weiter durch die zentrale Blendenbohrung 6.2 und die Bypassbohrungen 6.5 (Figur 2) des Blendenelementes 6 in die Durchgangsbohrung 4.1 des Anschlagelements 4. Da hierbei mehrere Bohrungen durchströmt werden, bleiben die Druckabfälle gering.

Wenn jedoch die durch den Volumenstrom des Fluids auf das Blendenelement 6 wirkende Kraft größer als die Vorspannkraft der Druckfeder 5 ist, wird das Blendenelement 6 mit seiner Bodenfläche 6.1 zur Anlage an die Stirnseite des Grundkörpers 4.3 des Anschlagelements 4 gebracht. Dann strömt das Fluid nur noch durch die zentrale Blendenbohrung 6.2 in die Durchgangsbohrung 4.1 des Anschlagelements 4 und weiter in die Durchgangsbohrung 3.1 des Steckers 3, wodurch eine volumenstromabhängige Druckreduzierung erfolgt. Die Druckabfälle steigen schlagartig an, wodurch die Einkuppelgeschwindigkeit reduziert wird. Gleichzeitig wird sichergestellt, dass das Blendenelement 6 beim Einkuppeln erst oberhalb eines bestimmten Volumenstroms, der über dem im normalen Betrieb auftretenden Volumenstrom liegt, zugeschaltet wird. Das heißt, die Bodenfläche 6.1 des Blendenelements 6 kommt an der Stirnseite des Grundkörpers 4.3 zur Anlage, wodurch die über den Umfang verteilten Bypassbohrungen 6.5 verschlossen werden und das Fluid nur noch durch die zentrale Blendenbohrung 6.2 in die Durchgangsbohrung 4.1 des Anschlagelements 4 strömen kann.

Die erfindungsgemäße Druckbegrenzungseinrichtung stellt somit eine volumenstromabhängig arbeitende Einrichtung dar, die bei einem kleinen Toleranzbereich für die Zuschaltung des Blendenelements 6 einen derart kleinen radialen Bauraum benötigt, dass ihr Einbau in eine Steckverbindung möglich ist.

### Bezugszeichenliste

- 1: Gehäuse
- 1.1: Gehäusebohrung
- 1.2: Durchgangsbohrung
- 1.3: Einbuchtung
- 1.4: Absatz
- 2: Druckleitung
- 3: Stecker
- 3.1: Durchgangsbohrung
- 4: Anschlagelement
- 4.1: Durchgangsbohrung
- 4.2: Mantelfläche
- 4.3: Grundkörper
- 4.4: Hohlraum
- 4.5: Schnapphaken
- 4.6: Nut
- 5: Federelement/Druckfeder
- 6: Blendenelement
- 6.1: Bodenfläche
- 6.2: zentrale Blendenbohrung
- 6.3: Seitenwand
- 6.4: Verlängerung
- 6.5: Öffnung/Bypassbohrung
- 7: O-Ring
- 7.1: O-Ring

## Patentansprüche

1. Druckbegrenzungseinrichtung die in einer hydraulischen Strecke zur Kupplungsbetätigung, umfassend einen Geberzylinder und einen Nehmerzylinder, die über eine von einem Fluid durchströmte Druckleitung (2) miteinander verbunden sind einbaubar ist, wobei die Druckbegrenzungseinrichtung zumindest ein mit einem Federelement (5) in Wirkverbindung stehendes und eine zentrale Blendenbohrung (6.2) sowie weitere über den Umfang verteilte Öffnungen (6.5) besitzendes, becherförmig ausgebildetes, Blendenelement (6) aufweist, welches in einem Gehäuse (1) axial beweglich aufgenommen und bei Überschreitung eines vorbestimmten Volumenstroms des Fluids zuschaltbar ist, **dadurch gekennzeichnet, dass** das federbelastete Blendenelement (6) innerhalb eines zumindest teilweise hohlzylindrisch ausgebildeten sowie in einer Gehäusebohrung (1.1) des Gehäuses (1) axial fixierten Anschlagelements (4) geführt ist und dass das Federelement (5) zwischen dem Blendeelement (6)
und dem Anschlagement (4) andgeordnet ist.

2. Druckbegrenzungseinrichtung nach Anspruch 1, dadurch gecklennzeichnet, dass das Blendenelement (6) zwischen einem durch eine Durchmesserverringerung der Gehäusebohrung (1.1) gebildeten Absatz (1.4) des Gehäuses (1) und einem innerhalb des Anschlagelements (4) ausgebildeten Grundkörper (4.3) axial bewegbar angeordnet ist.

3. Druckbegrenzungseinrichtung nach Anspruch 1 oder 2, **dadurch gekennzeichnet, dass** das mit dem Blendenelement (6) in Kontakt stehende und als Druckfeder ausgebildete Federelement (5) innerhalb eines Hohlraums (4.4) geführt ist, welcher zwischen dem Grundkörper (4.3) und einer radial außen befindlichen Mantelfläche (4.2) des Anschlagelements (4) ausgebildet ist.

4. Druckbegrenzungseinrichtung nach Anspruch 3, **dadurch gekennzeichnet, dass** die Mantelfläche (4.2) des Anschlagelements (4) mit ihrem Außenumfang an einer Wand der Gehäusebohrung (1.1) anliegt.

5. Druckbegrenzungseinrichtung nach einem der Ansprüche 2 bis 4, **dadurch gekennzeichnet, dass** das Blendenelement (6) mit seiner Bodenfläche (6.1) an einer Stirnseite des Grundkörper; (4.3) zum Anschlag bringbar ist.

6. Druckbegrenzungseinrichtung nach einem der Ansprüche 3 bis 5, **dadurch gekennzeichnet, dass** das Blendenelement (6) mit seiner Seitenwand (6.3) an der Innenseite der Mantelfläche (4.2) des Anschlagelements (4) anliegt.

7. Druckbegrenzungseinrichtung nach Anspruch 6, **dadurch gekennzeichnet, dass** die Seitenwand (6.3) des Blendenelements (6) anschlagelementseitig eine die Bodenfläche (6.1) überragende Verlängerung (6.4) aufweist, welche mit der Druckfeder (5) in Kontakt steht.

8. Druckbegrenzungseinrichtung nach einem der Ansprüche 3, 4 oder 6, **dadurch gekennzeichnet, dass** an dem Ende der Mantelfläche (4.2) Schnapphaken (4.5) vorgesehen sind.

9. Druckbegrenzungseinrichtung nach Anspruch 1, **dadurch gekennzeichnet, dass** das Anschlagelement (4) innerhalb der Gehäusebohrung (1.1) durch einen die Druckleitung (2) aufnehmenden Stecker (3) axial fixiert ist.

10. Druckbegrenzungseinrichtung nach Anspruch 1, **dadurch gekennzeichnet, dass** ein O-Ring (7) das Anschlagelement (4) gegen das Gehäuse (1) abdichtet.

## Claims

1. Pressure limiting device which can be installed in a hydraulic path for clutch actuation, comprising a master cylinder and a slave cylinder which are connected to one another via a pressure line (2) through which a fluid flows, wherein the pressure limiting device has at least one cup-shaped orifice element (6) which is operatively connected to a spring element (5) and which has a central orifice bore (6.2) and further openings (6.5) distributed over the circumference, which orifice element is accommodated in an axially movable manner in a housing (1) and can be activated in the event of an exceedance of a predetermined volume flow rate of the fluid, **characterized in that** the spring-loaded orifice element (6) is guided within an at least partially hollow cylindrical stop element (4) which is fixed axially in a housing bore (1.1) of the housing (1), and **in that** the spring element (5) is arranged between the orifice element (6) and the stop element (4).

2. Pressure limiting device according to Claim 1, **characterized in that** the orifice element (6) is arranged so as to be axially movable between a shoulder (1.4), which is formed by a diameter reduction of the housing bore (1.1), of the housing (1) and a main body (4.3) which is formed within the stop element (4).

3. Pressure limiting device according to Claim 1 or 2, **characterized in that** the spring element (5) which is in contact with the orifice element (6) and which is in the form of a compression spring is guided within a cavity (4.4) formed between the main body (4.3) and a shell (4.2), situated radially at the outside, of the stop element (4).

4. Pressure limiting device according to Claim 3, **characterized in that** the shell (4.2) of the stop element (4) bears with its outer circumference against a wall of the housing bore (1.1).

5. Pressure limiting device according to one of Claims 2 to 4, **characterized in that** the orifice element (6) can be placed in abutment with its base surface (6.1) against an end side of the main body (4.3).

6. Pressure limiting device according to one of Claims 3 to 5, **characterized in that** the orifice element (6) bears with its side wall (6.3) against the inner side of the shell (4.2) of the stop element (4).

7. Pressure limiting device according to Claim 6, **characterized in that** the side wall (6.3) of the orifice element (6) has, at the stop element side, an elongation (6.4) which projects beyond the base surface (6.1) and which is in contact with the compression spring (5).

8. Pressure limiting device according to one of Claims 3, 4 or 6, **characterized in that** snap-action hooks (4.5) are provided at the end of the shell (4.2).

9. Pressure limiting device according to Claim 1, **characterized in that** the stop element (4) is fixed axially within the housing bore (1.1) by a plug connector (3) which receives the pressure line (2).

10. Pressure limiting device according to Claim 1, **characterized in that** an O ring (7) seals off the stop element (4) against the housing (1).

## Revendications

1. Dispositif de limitation de pression qui peut être incorporé dans une section hydraulique pour l'actionnement d'un embrayage, comprenant un maître-cylindre et un cylindre récepteur qui sont connectés l'un à l'autre par le biais d'une conduite de pression (2) parcourue par un fluide, le dispositif de limitation de pression présentant au moins un élément de diaphragme (6) réalisé sous forme de gobelet, en liaison fonctionnelle avec un élément de ressort (5) et possédant un alésage de diaphragme central (6.2) ainsi que d'autres ouvertures (6.5) réparties sur la périphérie, lequel élément de diaphragme est reçu de manière déplaçable axialement dans un boîtier (1) et peut être connecté en cas de dépassement d'un débit volumique prédéterminé de fluide, **caractérisé en ce que** l'élément de diaphragme (6) sollicité par ressort est guidé à l'intérieur d'un élément de butée (4) réalisé au moins en partie sous forme cylindrique creuse et fixé axialement dans un alésage de boîtier (1.1) du boîtier (1), et **en ce que** l'élément de ressort (5) est disposé entre l'élément de diaphragme (6) et l'élément de butée (4).

2. Dispositif de limitation de pression selon la revendication 1, **caractérisé en ce que** l'élément de diaphragme (6) est disposé de manière déplaçable axialement entre un épaulement (1.4) du boîtier (1) formé par une réduction de diamètre de l'alésage de boîtier (1.1) et un corps de base (4.3) réalisé à l'intérieur de l'élément de butée (4)

3. Dispositif de limitation de pression selon la revendication 1 ou 2, **caractérisé en ce que** l'élément de ressort (5) en contact avec l'élément de diaphragme (6) et réalisé sous forme de ressort de compression est guidé à l'intérieur d'un espace creux (4.4) qui est réalisé entre le corps de base (4.3) et une surface d'enveloppe (4.2) de l'élément de butée (4) située radialement à l'extérieur.

4. Dispositif de limitation de pression selon la revendication 3, **caractérisé en ce que** la surface d'enveloppe (4.2) de l'élément de butée (4) s'applique avec sa périphérie extérieure contre une paroi de l'alésage de boîtier (1.1).

5. Dispositif de limitation de pression selon l'une quelconque des revendications 2 à 4, **caractérisé en ce que** l'élément de diaphragme (6) peut être amené en butée avec sa surface de fond (6.1) contre un côté frontal du corps de base (4.3).

6. Dispositif de limitation de pression selon l'une quelconque des revendications 3 à 5, **caractérisé en ce que** l'élément de diaphragme (6) s'applique avec sa paroi latérale (6.3) contre le côté intérieur de la surface d'enveloppe (4.2) de l'élément de butée (4).

7. Dispositif de limitation de pression selon la revendication 6, **caractérisé en ce que** la paroi latérale (6.3) de l'élément de diaphragme (6) présente du côté de l'élément de butée un prolongement (6.4) dépassant de la surface de fond (6.1), lequel est en contact avec le ressort de compression (5).

8. Dispositif de limitation de pression selon l'une quelconque des revendications 3, 4 ou 6, **caractérisé en ce que** des crochets d'encliquetage (4.5) sont prévus à l'extrémité de la surface d'enveloppe (4.2).

9. Dispositif de limitation de pression selon la revendication 1, **caractérisé en ce que** l'élément de butée (4) est fixé axialement à l'intérieur de l'alésage de boîtier (1.1) par un connecteur (3) recevant la conduite de pression (2).

10. Dispositif de limitation de pression selon la revendication 1, **caractérisé en ce qu'**un joint torique (7) étanchéifie l'élément de butée (4) vis-à-vis du boîtier (1).
